# EUROPÄISCHE PATENTANMELDUNG

(11) **EP 3 311 664 A1**
(43) Veröffentlichungstag der Anmeldung: **25.04.2018**
(21) Anmeldenummer: 17196704.5
(22) Anmeldetag: 16.10.2017
(51) Int. Cl.: A01M 19/00, A01M 29/18

(54) **VERFAHREN UND VORRICHTUNG ZUM ABTÖTEN VON VARROAMILBEN**

(30) Priorität: 17.10.2016 DE 102016119694
(71) Anmelder: Krüger, Rainer, 88167 Maierhöfen (DE)
(72) Erfinder: Krüger, Rainer, 88167 Maierhöfen (DE)

(57) **Zusammenfassung**

Die vorliegende Erfindung betrifft ein Verfahren zur Bekämpfung von Milben unter Verwendung von Schall in einer Beute, dadurch gekennzeichnet, dass der Schall in einem Frequenzbereich zwischen 14.000 Hz bis 18.000 Hz für einen Zeitraum von 20 bis 80 Tagen mit einem am Abstrahlungsbereich gemessenen Schalldruck von 80 dB bis 100 dB in Form einer Sinuskurve oder Rechteckkurve kontinuierlich abgestrahlt wird.

## Beschreibung

Die Erfindung betrifft ein Verfahren und eine Vorrichtung zur Bekämpfung von Varroamilben in Magazinbeuten. Diese Milben spielen insbesondere als Parasiten an Honigbienen eine wirtschaftlich sehr bedeutende Rolle. Die Milbe entwickelt und vermehrt sich dabei in der verdeckelten Brut im Bienenstock und führt bei einer befallenen Biene auf verschiedenen Wegen zu deren Schwächung. Zum einen verlieren befallene Larven durch das Aussaugen der Hämolymphe direkt an Gewicht, die ausgeschlüpften Bienen bleiben um etwa ein Zehntel kleiner als gesunde Tiere und besitzen eine deutlich verkürzte Lebensspanne. Sie haben weiter schlechtere Lernleistungen und kehren häufig nicht in den Stock zurück. Die Varroamilbe schädigt das Immunsystem der ausgewachsenen Biene und kann zu der Virulenz eines vorher bereits erfolgten Pathogenbefalls beitragen.

Die Bekämpfung der Varroamilbe erfolgt durch laufende Kontrolle der Befallsstärke insbesondere per Zählung der pro Tag auf den Boden der Bienenbeute gefallenen toten Milben und gemäß der am zuverlässigsten arbeitenden Puderzuckermethode, wonach eine bestimmte Menge von erwachsenen Honigbienen mit Puderzucker eingestäubt wird, wodurch die aufsitzenden weiblichen Varroamilben den Halt verlieren und zusammen mit dem Puderzucker von den Bienen abgesiebt und ausgezählt werden können. Werden dabei im Juli 25 Milben oder mehr ermittelt, ist die Schadschwelle überschritten und eine sofortige Behandlung ist erforderlich.

Die Bekämpfung der Milben kann dabei chemisch mit Akariziden, vor allen Dingen Phosphorsäureestern erfolgen. Teilweise gute Erfolge wurden ebenfalls durch den Einsatz von organischen Säuren wie Ameisensäure, Milchsäure oder Oxalsäure erreicht. Schließlich können auch ätherische Öle, insbesondere Thymol eingesetzt werden. Der Einsatz von organischen Säuren ist dabei nicht ungefährlich und wirkt nicht bei allen Temperaturen oder Luftfeuchtigkeiten. Bekannt sind ebenfalls biologische Bekämpfungsmethoden und physikalische Methoden. Eine solche physikalische Methode offenbart die DE 198 00 293 A1. Gemäß dieser werden Schallwellen mit einer Frequenz im Bereich von 4.000 Hz - 20.000 Hz, insbesondere von 10.000 Hz - 17.000 Hz eingesetzt, wobei die Schallleistung am Wirkungsort 10⁻⁶ W/m² beträgt und die Schallwellen zwischen 30 Minuten bis 240 Stunden, insbesondere zwischen 1 - 96 Stunden angewandt werden. Die Beschallung erfolgt dabei mit variierender Frequenz und/oder variierender Leistung. Diese Methode ist jedoch nicht sonderlich wirksam.

Aus der DE 38 39 601 A1 ist ein ähnliches physikalisches Verfahren bekannt, bei dem eine Stromquelle, ein Oszillator und ein Lautsprecher dazu verwendet werden, in dreimonatigem Dauereinsatz bei einer Frequenz von bis zu 45.000 Hz angewandt. Diese Vorrichtung ist dabei in einem Bienenhaus eingesetzt worden und beschallte mehrere Magazinbeuten.

Die vorliegende Erfindung stellt sich daher die Aufgabe, diese physikalische Methode in ihrer Wirksamkeit zu verbessern und eine entsprechende Vorrichtung anzugeben, mit der das Verfahren ausgeführt werden kann.

Diese Aufgabe wird durch ein Verfahren zur Bekämpfung von Milben unter Verwendung von Schall in einer Beute dadurch gelöst, dass der Schall in einem Frequenzbereich zwischen 14.000 Hz und 18.000 Hz für einen Zeitraum von 20 - 80 Tagen mit einem, am Abstrahlbereich gemessenen Schalldruck von 80 dB - 100 dB in Form einer Sinuskurve oder einer Rechteckkurve kontinuierlich abgestrahlt wird.

Es zeigt sich, dass im Gegensatz zum Stand der Technik nur diese Merkmalskombination wirksam ist, insbesondere ein deutlich engerer Frequenzbereich bei der Bekämpfung der Varroamilbe wirksam ist. Es hat sich weiter gezeigt, dass eine Behandlung nur dann erfolgreich ist, wenn sie über den genannten, relativ langen Zeitraum durchgeführt wird, der mindestens 20 Tage betragen muss, besser 25 Tage, jedoch auch bis zu 40 Tagen oder mehr weitergeführt werden kann, beispielsweise um Neubefall zu verhindern. Es hat sich weiter gezeigt, dass auch bei bestimmten Frequenzgängen ein noch längerer Zeitraum von 40 Tagen oder mehr zu besseren Ergebnissen führt, insbesondere ein Zeitraum von 40 Tagen bis 80 Tagen. Dieser lange Zeitraum führt auch bei Rechteck-und sinusförmigen Kurven zu einem exzellenten Ergebnis. Der angegebene Schalldruckpegel entspricht dabei einem Schalldruck von 360 mPa - 2 Pa. 80 dB entsprechen dabei 10⁻⁴ W/m², 100 dB entsprechen 10⁻² W/m². Erfindungsgemäß ist besonders wichtig, dass die Schallwellen sinusartige Wellen sind. Auch rechteckförmige Wellen haben ein gutes Ergebnis erzielt, welche sogar eine stärkere Wirkung zeigen können als die auch wirksamen sinusartigen Wellen. Das Ansteuern in Form von dreieckförmigen oder anders geformten Wellen ist im genannten Frequenzbereich erstaunlicherweise nicht wirksam, es sei denn, es werden Wellenformen eingesetzt, die einen Dreiecksanteil enthalten, jedoch nicht rein dreieckig ausgebildet sind. Diese zeigen bei längerer Behandlungsdauer ebenfalls eine gute Wirkung. Für die Wirksamkeit des erfindungsgemäßen Verfahrens ist ebenfalls wichtig, dass die Abstrahlung kontinuierlich und nicht getaktet erfolgt. Nur in dieser Kombination war das Verfahren extrem wirksam. Dies gilt vor allem auch dann, wenn die Behandlungsdauer an der oberen zeitlichen Grenze angesiedelt ist. Hintergrund ist hier, dass sich die adulte Milbe zur Eiablage auch mehrfach, insbesondere drei oder viermal hintereinander in kurz vor der Verdeckelung stehenden Zellen des Brutraums zurückzieht, sich dort einschließen läßt und sich so der Wirkung der Schallwellen längere Zeit entziehen, bzw. diese mindern kann. Diese längere Behandlungsdauer führt dazu, dass sowohl die adulte Milbe als auch die jeweils abgelegten Eier, bzw. Juvenilstadien der Wirkung der Schallwellen ausgesetzt sind. Die längeren Behandlungszeiträume, insbesondere 40 Tage oder auch länger als 40 Tage, erlauben daher auch den Einsatz von nicht rein rechteckigen bzw. sinusförmigen Wellen, die für sich genommen weniger wirksam als diese sind.

Es zeigt sich, dass die derart bestrahlten Bienen von dem Verfahren nicht beeinträchtigt werden. Diese reagieren zwar einem Frequenzbereich von 2.000 Hz bis etwa 8.000 Hz relativ stark, bis etwa 10.000 Hz mit Unruhe, ab einer Frequenz von etwa 11.000 Hz zeigten sie jedoch keine Reaktion mehr. Das Verfahren ist damit völlig unschädlich für die Bienen und mindert deren Leistungsfähigkeit nicht. Vermutlich bewirkt das Verfahren eine Anregung der Resonanzfrequenz sowohl der adulten Milben als auch der juvenilen Stadien und stört damit deren Physiologie.

Erfindunsgemäß ist ein Verfahren, bei dem der Schall in einem Frequenzbereich zwischen 14.000 Hz bis 16.000Hz, für einen Zeitraum von 20 bis 40 Tagen abgestrahlt wird. Dies erfolgt bei ansonsten unveränderten Parametern.

In Weiterbildung des Verfahrens ist vorgesehen, dass die Frequenz im genannten Frequenzbereich während der Anwendung variiert wird, die weiteren Parameter des Verfahrens werden dabei nicht geändert.

Besonders bevorzugt ist eine Ausgestaltung des Verfahrens, bei dem der Schall in einem Abstand von 5 cm bis 15 cm, insbesondere von 8 cm bis 10 cm von einem Sitz der Bienen entfernt abgestrahlt wird. Es hat sich überraschenderweise gezeigt, dass ein derart geringer Abstand des Lautsprechers vom Bienensitz zu einem besonders wirksamen Schallpegel führt, und der Schall bis in die Brutwaben vordringt. Dies ist sehr wichtig, da der Schall seine Leistung mit zunehmender Entfernung verliert und in ca. 50 cm bis 60 cm Entfernung bereits nur noch etwa 70 % der Ausgangsleistung erreicht. Es hat sich bei genaueren Messungen gezeigt, dass die Schallleistung an bzw. in einer verdeckelten Brutzelle mindestens bei rund 40 dB, besser bei 45 dB liegen muss, um Wirkung auf die Milben auszuüben. Es zeigt sich, dass sich die Milben in der verdeckelten Brut nicht weitervermehren und die bereits auf der Biene sitzenden Milben absterben.

Besonders wirksam ist ein Schalldruck von 85 dB - 100 dB in dieser geringen Entfernung.

Wird der Schall in Form einer nicht reinen Rechteckkurve bei ansonsten unveränderten Parametern abgestrahlt, so hat sich gezeigt, dass dies für einen Zeitraum von 40 Tagen oder mehr erfolgen muß und dass dieser lange Behandlungszeitraum auch bei den anderen Kurvenformen zu besonders guten Ergebnissen führt. Unter einer nicht reinen Recheckkurve wird dabei eine verstanden, die einen dreieckigen Anteil aufweist, bei der also der die ansteigende mit der abfallenden Flanke verbindende Teil der Kurve nicht streng waagerecht verlaufend ist. Eine solche Kurve kann sich aufgrund von Charakteristika der eingesetzten Lautsprecher ergeben, selbst wenn das Ausgangssignal der Steuerung tatsächlich ein rein rechteckiges ist.

Die Aufgabe wird auch durch eine Vorrichtung zur Bekämpfung von Milben gelöst, die eine Stromversorgung, einen Signalgenerator und einen Schallwandler, nämlich einen Lautsprecher aufweist, sowie eine Befestigungsvorrichtung zur Befestigung an einer Beute. Der Signalgenerator ist dabei dazu ausgelegt und programmiert, den Schall gemäß den Merkmalen des Verfahrens über diesen Zeitraum abzugeben. Die Stromversorgung ist erfindungsgemäß zunächst mittels einer Batterie oder eines Akkumulators verwirklicht, die ohne Weiteres auch mit einem Solarelement verbunden sein können. Die erfindungsgemäße Vorrichtung ist insbesondere in einer Zarge (Aufsetzkasten) einer Beute angeordnet bzw. anordenbar. Derartige Magazinbeuten bestehen aus oben und unten offenen Holz- oder Kunststoffkisten, die als Zargen bezeichnet werden. In diese werden von oben die Rähmchen mit den Bienenwaben eingehängt, wobei sich eine Magazinbeute aus mehreren, übereinander angeordneten Zargen zusammensetzt. Diese werden unten mit einem Boden und oben mit einem Deckel abgeschlossen, wobei der Boden ein Flugloch in Form eines Schlitzes aufweist und der Deckel als Wetterschutz dient. Die erfindungsgemäße Vorrichtung wird nun einfach in der Mitte derjenigen Zarge auf die dort befindlichen Rähmchen gestellt, die den aktuellen Bienensitz bilden, wobei die Schallabstrahlrichtung nach unten erfolgt. Eine Beschallung eines ganzen Bienenhauses mit einer Vorrichtung oder auch nur die Beschallung mehrerer, nebeneinander stehender Magazinbeuten mit nur einer Vorrichtung ist nicht wirksam.

Es ist eher nachteilig, die erfindungsgemäße Vorrichtung oberhalb des Honigraums anzuordnen. Diese sollte vielmehr in unmittelbarer Nähe zum Brutraum angeordnet sein, in jedem Fall jedoch am aktuellen Bienensitz.

Erfindungsgemäß ist auch eine Ausführungsform, bei der die Vorrichtung an einer Zarge befestigt ist, wobei diese Zarge zusätzlich eine Steuerung und/oder eine Leistungsüberwachung der Batterie und/oder eine Datenaufzeichnung und/oder eine Datenschnittstelle aufweisen kann. Insbesondere kann auch ein permanenter Datenspeicher vorgesehen sein.

In einer Zarge können auch insbesondere zwei oder vier Vorrichtungen angeordnet sein, um einen ausreichenden Schalldruck in den geschlossenen Brutwaben und den Wohnwaben zu erreichen. Eine feste Verbindung zu der Zarge kann mit Vorteil auch verstärkt Schall über körperschallleitung weiterleiten. Die genannten zusätzlichen Ausstattungen dienen dazu, zum einen die Funktionsfähigkeit der Vorrichtung zu dokumentieren, zum anderen diese beispielsweise an einen zentralen Rechner per WLAN, Funk oder ähnlichen Mitteln zu übertragen. Dies ist insbesondere für Großimkereien oder hauptberufliche Imker wünschenswert. Im einfachsten Fall weist diese erfindungsgemäße Vorrichtung diese zusätzlichen Funktionen jedoch nicht auf.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:

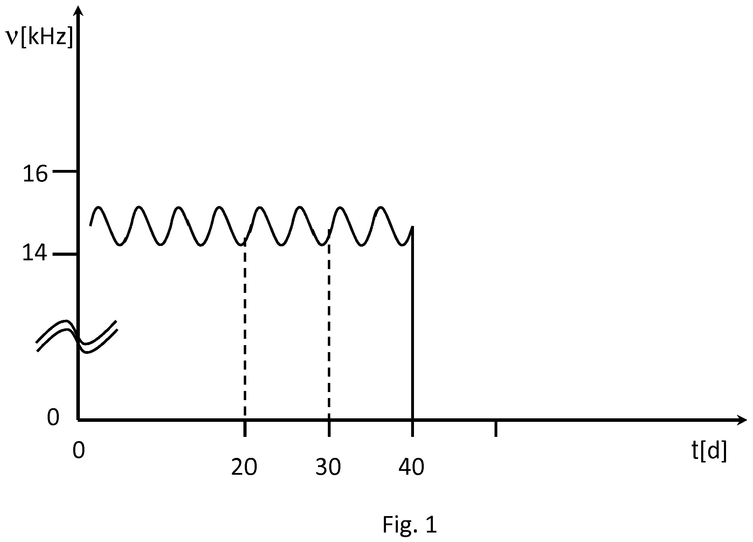

**Fig. 1** zeigt schematisch einen Frequenzgang des Verfahrens und dessen Anwendungsdauer. Auf der X-Achse ist die Zeit in Tagen aufgetragen, auf der Y-Achse die Frequenz in Kilohertz. Zu erkennen ist, dass für einen Zeitraum von 0- 20 bzw. 30, bzw. 40 Tagen eine skizzierte sinusförmige Schallabstrahlung in einem Bereich zwischen 14.000 Hz und 16.000 Hz erfolgt, wobei diese Abstrahlung zwingend kontinuierlich ist und nicht getaktet, wobei der Schall sinusförmig ist und wobei in einem Abstand von 8 cm - 10 cm von dem Lautsprecher noch 50 % der am Abstrahlungsort erreichten Schalldruckleistung erzielt werden. Hierbei ist die abgestrahlte Schallleistung die Ursache und der erzeugte Schalldruck die Wirkung.
   Es zeigt sich, dass die Bienen bei diesen Parametern unbeeinträchtigt bleiben, beispielsweise in ihrer Wintertraube unter dem Schallgerät sitzen bleiben und ihren Bienensitz nicht verlegten. In einigen Fällen wurde sogar das Schallgerät in die Waben eingebaut.
   Es zeigt sich weiter, dass das Verfahren sowohl die Vermehrung der Varroamilben stoppt als auch deren Zahl pro Volk deutlich reduziert und damit sehr wirksam ist. Hierbei ist ein Einsatz in der Winterruhe von Vorteil, da sich die Milben mangels Brut nicht in die Bruträume zurückziehen kann. Vorteilhafte und besonders wirksame Beschallungszeiträume sind von Februar bis Mitte April und von Mitte Juli bis Mitte Oktober sowie in der brutfreien Zeit von November bis Januar. Bei hohem Beutenvolumen und hoher Volkstärke ist das erfindungsgemäße Verfahren weniger deutlich wirksam, optimal sind ein bis zweizargige Völker.

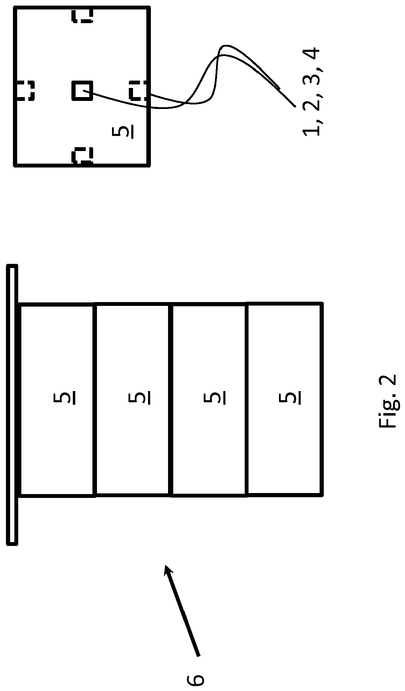

**Fig. 2** zeigt einen schematischen Aufbau einer Maganzinbeute 6 bestehend aus mehreren Zargen 5 sowie einem Deckel. Der Deckel kann Solarzellen tragen und damit Teil der Stromversorungung 1 sein, wobei die Vorrichtung aufweist eine Stromversorgung 1, einen Signalgenerator 2, einen Schallwandler 3 und eine Befestigungsvorrichtung 4. Hierbei kann erfindungsgemäß eine Stromversorgung mehrere Signalgeneratoren und/oder mehrere Schallwandler und/oder Schallwandler versorgen, ebenso kann ein einziger Signalgenerator mehrere Schallwandler mit Signalen versorgend sein. Die Befestigungsvorrichtung kann erfindungsgemäß auch nur eine Aufstandsfläche oder ähnliche Vorrichtungen zur Anordnung der Vorrichtung an bzw. in einer Zarge sein. Mit anderen Worten ist auch eine Vorrichtung erfindungsgemäß, die lediglich lose aufgelegt oder aufgestellt wird.
   Rechts neben der schematischen Magazinbeute 6 ist eine Aufsicht auf eine Zarge 5 mit vier an ihrer Wand montierten Vorrichtungen in gestrichelter Form dargestellt, wobei erfindungsgemäß auch nur eine Vorrichtung pro Magazinbeute vorhanden sein kann. Diese befindet sich hier als gefülltes Rechteck in der Mitte der Zarge, sie ist auf die Rähmchen aufgelegt. Anstelle einer Anordnung von mehreren Vorrichtungen in einer Zarge und damit in einer horizontalen Ebene können diese auch vertikal verteilt angeordnet sein, insbesondere in jeder Brutbeute eine oder mehrere.

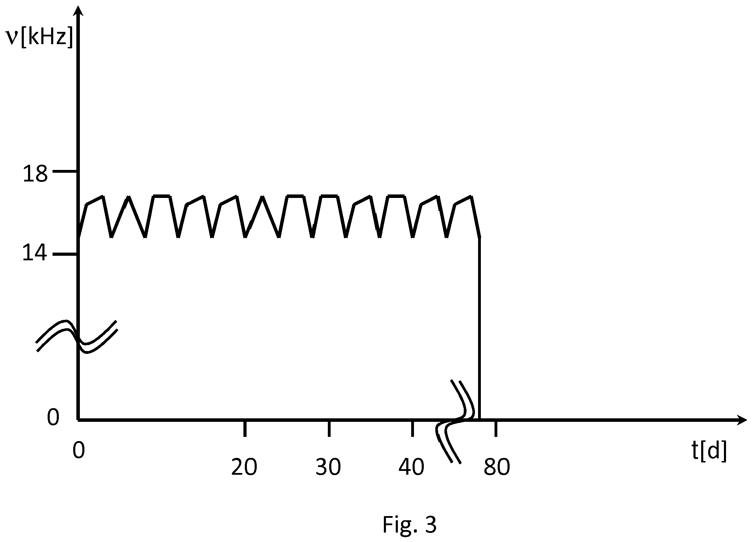

**Fig. 3** zeigt wie Fig. 1 schematisch einen Frequenzgang des Verfahrens und dessen Anwendungsdauer. Auf der X-Achse ist die Zeit in Tagen aufgetragen, auf der Y-Achse die Frequenz in Kilohertz. Zu erkennen ist, dass für einen Zeitraum von 40 Tagen bis 80 Tagen die skizzierte rechteckähnliche Schallabstrahlung in einem Bereich zwischen 14.000 Hz und 18.000 Hz die erfindungsgemäße Wirkung zeigt. Diese rechteckähnliche Kurve weist zu einem geringen Anteil eher dreieckige, zu einem höheren Anteil rechteckähnliche und zu einem eher geringeren Anteil rein rechteckige Verläufe auf, wie sie sich in der Praxis bei Einsatz unterschiedlicher Lautsprecher ergeben können. Es zeigt sich, dass bei derartigen Mischkurvenformen längere Behandlungszeiten von 40 Tagen oder mehr besonders wirksam sind. Es zeigt sich jedoch in der Praxis auch, dass selbst bei den besonders wirksamen reinen Rechteckkurven längere Behandlungszeiten von 40 Tagen, insbesondere von mehr als 40 Tagen besonders wirksam sind. In einem Feldversuch wurde mittels der Puderzuckermethode bei 250ml Bienen eine Milbenzahl von 60 ermittelt. Dies wurden mit 55 dB Schall mit einer nicht rein-rechteckigen Schallkurve beschallt. Nach 21 Tagen Behandlungsdauer zeigten sich in 250ml Bienen nur noch 36 Milben, nach 34 Tagen nur noch 11 Milben. Während der Behandlungsdauer waren insgesamt 3864 Milben gefallen, was einem Wirkungsgrad von rund 88% ergibt.

In einem weiteren Versuch fand sich bei einem dreizargigen, stark milbenbefallenen Volk zu Beginn ein Abfall von 33Milben/Tag. Hieraus läßt sich ein Gesamtbestand von rund 9.000 Milben in dem Volk abschätzen. Nach 40 Tagen Behandlungsdauer fanden sich 42 Milben/Tag, die Behandlung wurde nach Entnahme der Königin bis zu Tag 46 fortgesetzt, zu dem auch die Drohnenbrut geschlüpft war. In dieser Zeit waren 2339 Milben gefallen, eine abschließende Ameisensäurebehandlung ergab nur noch 546 Milben für das gesamte Bienenvolk. Hieraus errechnet sich ein Wirkungsrgad zwischen 77% und 95%, je nachdem, welche Berechnungsmethode zugrundegelegt wird, also ob auch Schätzungen bezüglich außerhalb des Stocks abgefallener oder nicht in den Stock zurückgekehrter Milben berücksichtigt werden oder nicht. Ohne Behandlung wäre ein derart stark befallenes Volk innerhalb von zwei bis drei Wochen zugrunde gegangen.

Diese erfindungsgemäße Vorrichtung regt die Körpereigenfrequenz der Milben an, nicht jedoch diejenige der Bienen. Insbesondere wirkt sie bei der adulten Milbe auf deren Sinneshaärchen und versetzt sie damit in einen permamenten Streß. Diese Anregung der Eigenfrequenz der Milben führt zu einer Verhaltensstörung und zu einem Absterben während und nach der Behandlung. Es zeigte sich, dass mit diesem Verfahren über diese Vorrichtung eine annähernde Milbenfreiheit erreicht werden konnte. Hierfür verantwortlich waren die Einhaltung der genannten Frequenzgrenzen, die sehr eng beieinander liegen und für die Bienen unschädlich sind, die Abstrahlung einer Schallwelle in Form einer Rechteckkurve oder Sinuskurve und deren hoher Schalldruck bei langer Anwendung. Nur bei dieser Kombination zeigte sich die deutliche Wirkung auf die Varroamilben, wobei anstelle der Sinuskurve auch und nur noch eine Rechteckkurve, bzw. eine rechteckähnliche Kurve Wirkung zeigten.

### BEZUGSZEICHENLISTE

- 1: Stromversorgung
- 2: Signalgenerator
- 3: Schallwandler
- 4: Befestigung
- 5: Zarge
- 6: Beute

## Patentansprüche

1. Verfahren zur Bekämpfung von Milben unter Verwendung von Schall in einer Beute, **dadurch gekennzeichnet, dass** der Schall in einem Frequenzbereich zwischen 14.000 Hz bis 18.000Hz für einen Zeitraum von 20 bis 80 Tagen mit einem am Abstrahlungsbereich gemessenen Schalldruck von 80 dB bis 100 dB in Form einer Sinuskurve oder Rechtkurve kontinuierlich abgestrahlt wird.

2. Verfahren gemäß Anspruch 1, bei dem der Schall in einem Frequenzbereich zwischen 14.000 Hz bis 16.000Hz, für einen Zeitraum von 20 bis 40 Tagen abgestrahlt wird.

3. Verfahren gemäß Anspruch 1 oder 2, bei dem die Frequenz im genannten Frequenzbereich während der Anwendung variiert wird.

4. Verfahren gemäß Anspruch 1, 2 oder 3, bei dem der Schall in einem Abstand von 5 cm bis 15 cm, insbesondere von 8 cm bis 10 cm von einem Sitz der Bienen abgestrahlt wird.

5. Verfahren nach einem der vorhergehenden Ansprüche, bei dem der Schalldruck 85 dB bis 95 dB beträgt.

6. Verfahren nach einem der vorhergehenden Ansprüche, bei dem der Schall in Form einer nicht reinen Rechteckkurve für einen Zeitraum von 40 Tagen oder mehr mit ansonsten unveränderten Parametern abgestrahlt wird.

7. Vorichtung zur Bekämpfung von Milben, aufweisend eine Stromversorgung (1), einen Signalgenerator (2) und einen Schallwandler (3) sowie eine Befestigungsvorrichtung (4) zur Anordnung an einer Zarge (5) einer Beute (6).

8. Vorrichtung gemäß Anspruch 5, **dadurch gekennzeichnet, dass** die Vorrichtung an einer Zarge (5) befestigt ist, insbesondere zwei, drei, oder mehr Vorrichtungen in einer Zarge (5) befestigt sind.
